# EUROPEAN PATENT APPLICATION

(11) **EP 1 895 460 A2**
(43) Date of publication of application: **05.03.2008**
(21) Application number: 07253205.4
(22) Date of filing: 15.08.2007
(51) Int. Cl.: G06Q 20/00

(54) **Methods and apparatus for managing RFID and other data**

(30) Priority: 29.08.2006 US 468025
(71) Applicant: NCR Corporation, Dayton, Ohio 45479 (US)
(72) Inventor: Fowler, Matthew T, Atlanta, GA 30341 (US); Wilson, John E, Suwanee, GA 30024 (US); Hoffman, Mark Steven, Dover, OH 44622 (US)
(74) Representative: Williamson, Brian

(57) **Abstract**

Systems and techniques for coordinating data received from radio frequency identification (RFID) tags and additional data input devices. An RFID reader communicates with RFID tags and also receives data from additional input devices that may be correlated with the RFID data. The reader correlates information received from various data sources. Correlation may include validation of RFID data with corresponding data received from other devices. Once data has been received and correlation has been performed, transaction entries are prepared based on the correlated and validated data. Transaction entries may be passed to a data station for processing or logging, or to allow the data station to indicate appropriate actions to be taken. Appropriate software modules used by the reader are changed in response to changes to data input devices or the data station used with the reader.

## Description

The present invention relates generally to improvements to management of data received from data input and communication devices. More particularly, the invention relates to improved systems and techniques for managing data communications from a radio frequency identification (RFID) reader and other data input and communication devices, and using a common intermediary, such as the RFID reader, to facilitate communication between the data communication devices and a data processing facility making use of the data.

Radio frequency devices are frequently used in transactions involving goods. They provide what can be a very large amount of information to identify goods of interest, for example, goods involved in a retail checkout transaction, or goods being managed in a warehouse. Frequently, in a transaction involving goods, such as a retail checkout transaction, or a search for or identification of goods undertaken by an inventory control system, RFID information relating to the goods is received along with information from other input devices. Such devices may include bar code scanners, data terminals, financial information capturing devices such as credit card or debit card readers, and other devices used to capture or receive whatever additional data may be needed to conduct the transaction. In many cases, data from all these devices is provided to a data processing facility, for example, a checkout transaction terminal.

RFID technology is presently undergoing a period of rapid change and development. Other data input devices also continue to undergo development and improvement. Systems that use data collected by the data input devices are typically relatively mature. When new or improved data input devices are developed, for example, improved RFID readers or readers adapted to new or improved RFID technologies, a significant portion of the delay between development and implantation of the devices arises from the need to adapt software to allow interaction between the device and a data processing station receiving data from the device. In prior art applications, implementation of a new data input device frequently requires adaptation of software for the data processing station, in order to allow the data processing station to interact with the data input device.

An RFID reader receives information by communicating with RFID tags. An RFID tag is an object that can be attached to or embedded or incorporated in a product or other object or entity, and communicate information by radio transmission. An RFID tag communicates with an RFID reader in order to provide the reader with identification and other information stored in the tag. RFID tags may come in numerous different forms. For example, an RFID tag may be affixed to products, may be embedded in a key fob or identification card or badge, or may come in any number of alternative forms.

RFID readers typically operate by requesting and receiving data at a very high rate. A reader may interrogate RFID tags within range at a rate on the order of hundreds of times per second, and receive and process responses from devices at a similar rate. The reader analyzes the responses to the interrogations in order to identify responses coming from unique RFID tags. For example, erroneous or incomplete reception of duplicate responses from one device may lead to the interpretation of the responses as coming from different tags. In order to avoid such possibilities, a reader may perform error correction and other processing on each response in order to insure that responses from devices are properly interpreted. Such a capability, which is inherent in the operation of many RFID readers, means that RFID readers typically have significant processing power. The processing power of an RFID reader is typically more than sufficient to carry out its RFID communication functions and to receive and process data from other data capture devices used in a transaction and to manage communication between the RFID reader and one or more RFID tags, as well as additional data capture devices and, the other data capture devices, and the a point of sale terminal used to conduct the transaction. Typically, sufficient processing power is available to conduct multiple simultaneous transactions using a plurality of combinations of point of sale terminals, RFID readers, and additional data capture devices.

The present invention takes advantage of the processing power inherent in a typical RFID reader to implement an RFID reader controller that manages both the operation and communication of an RFID reader, and the operation and communication of other data input and communication devices used in conjunction with the RFID reader. According to one aspect of the invention, an RFID reader suitably includes a controller operating under the direction of controller software providing a centralized communications interface for the RFID reader and various input devices that may be used with the reader. Suitably, the communications interface includes a number of individual modules for different input devices, with a variety of different modules and a number of different interface ports provided so as to support the use of a number of different combinations of input devices, with devices being able to be added and removed as desired without signification modification or reprogramming of the controller. Suitably, the controller software mediates communication between the various input devices and a data station. The controller software is suitably implemented in layers, so that a change to or substitution of a data input device, or use of the RFID reader operated by the controller with a different data station, can be achieved with relatively simple software changes that require adaptation only for the changed device, and not for the devices that are continued in use.

Preferably, a substantial proportion of the processing needed to prepare a transaction entry is conducted by the controller software, with the data station simply receiving data coordinated and formatted by the controller software.

Embodiments of the present invention will now be described, by way of example, with reference to the accompanying drawings, in which:
Fig. 1 illustrates a point of sale terminal using an RFID reader coordinating transactions according to an aspect of the present invention;
Fig. 2 illustrates additional details of the RFID reader used by the point of sale terminal of Fig. 1;
Fig. 3 illustrates a system including a plurality point of sale stations using RFID readers according to an aspect of the present invention;
Fig. 4 illustrates a warehouse control system using an RFID reader coordinating transactions according to an aspect of the present invention; and
Fig. 5 illustrates a process of data gathering and coordination according to an aspect of the present invention.

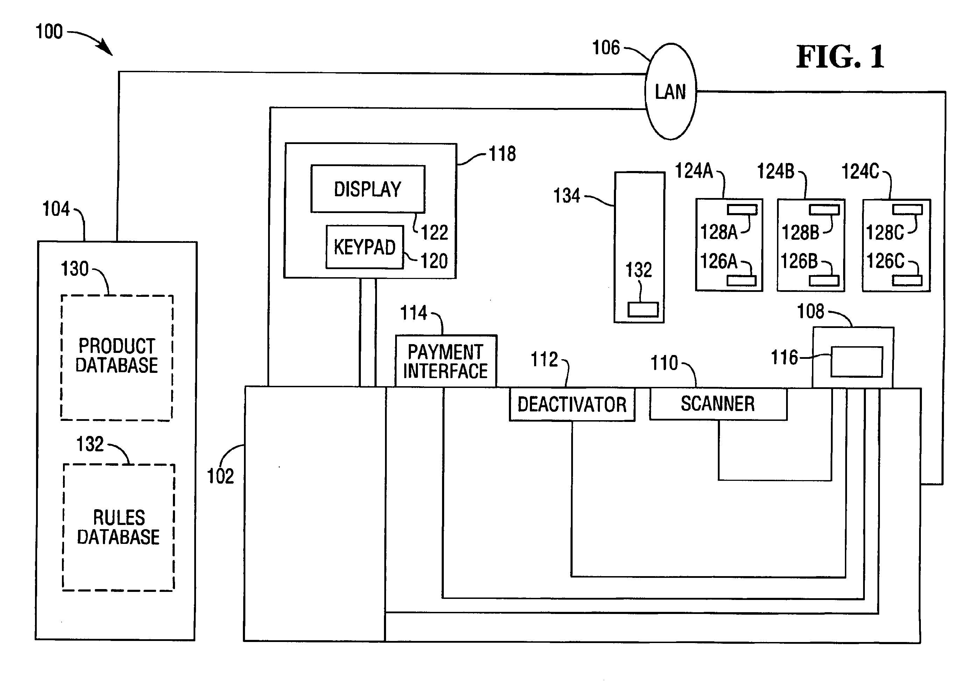

Fig. 1 illustrates a retail checkout station 100 operating according to an aspect of the present invention. The checkout station 100 includes a point of sale terminal 102, suitably communicating with a central database 104 storing information and providing services needed to manage a transaction, such as price and inventory information. The point of sale terminal 102 suitably communicates with the database 104 over a communication system such as a local area network 106.

The checkout station 100 also may suitably include a plurality of data input and communication devices. These devices may include a radio frequency identification (RFID) communication device, herein referred to as an RFID reader 108, as well as a variety of other data input and communication devices. In the present exemplary embodiment, the devices include a bar code scanner 110, a security tag deactivator 112, and a payment processing interface 114. The RFID reader 108 communicates with RFID tags in order to conduct transactions. The RFID reader 108 has significant processing power, enabling it to process the large amounts of data generated by typical RFID communication. An RFID reader typically engages in many interrogations of RFID tags within range, and receives many responses from these tags. The interrogations and responses may occur at a rate on the order of hundreds of times per second, generating large volumes of data to be processed and analyzed. The reader 108 operates under the control of a reader controller 116. The processing needed to carry out coordination between data input and communication devices such as the devices 110, 112, and 114, and the terminal 102, represents a negligible addition to the processing needed to carry out RFID communication. Therefore, the processing hardware implemented in the controller 116 can be expected to be sufficient to carry out RFID communication as well as any additional data coordination and communication functions needed to perform retail transactions at the station 100. Specific hardware and software implementing the controller 116 is described in greater detail below.

When a retail transaction is to be initiated, a user makes an appropriate input at the point of sale terminal 102, suitably using a user interface 118. The user interface 118 suitably includes a keypad 120 and display 122. The display 122 may be a touchscreen. Typically, a transaction includes a series of data entries, an indication that the data entries are completed, computation and presentation of a total, processing of payment, and closing of the transaction.

Whenever a data entry is expected that may be furnished with information from a reader, the point of sale terminal 102 sends an appropriate indication to the reader 108. The reader controller 116 communicates with the various input devices in order to receive information. The reader controller 116 coordinates the information received and builds a transaction entry, which is then furnished to the terminal 102. The terminal 102 adds the entry to a transaction, acknowledges the transaction entry, and awaits further data, such as user inputs or additional data entries from the reader 108.

To take an example of a transaction that may be conducted using a reader such as the reader 108, suppose that a user initiates a retail transaction. The terminal 102 sends a signal to the reader 108 that it is awaiting data entry, and the reader controller 116 receives and coordinates incoming data from various devices. For example, suppose that a customer presents three identical shirts 124A-124C, bearing RFID tags 126A-126C, respectively.

Each RFID tag returns RFID information in response to an interrogation. This RFID information suitably includes a unique RFID identifier, and may also include relatively comprehensive product information, including descriptive information and a product identifier that can be used to retrieve stored product information, such as price information, and can also be correlated with product identifiers taken from other data input devices. For example, the RFID information returned by each of the RFID tags 126A-126C may include a universal product code (UPC) corresponding to the code appearing on a bar coded tag on the shirt.

Typically, the reader 108 reads whatever tags are within range, and may therefore inadvertently identify tags that are not being presented at the station 100. In the present exemplary case, the shirts 124A-124C also include bar codes 128A-128C, encoding the UPC information associated with each of the shirts. The controller 116 correlates the information received from the RFID tags against bar code information scanned and decoded by the bar code scanner 110. Suitably, the controller 116 receives the information from the RFID tags 126A-126C, establishes that three products with unique RFID codes have been presented, and identifies the UPC codes associated with the RFID codes. The controller 116 may then issue a request for a user to scan the products, suitably identifying the products by name or description. This request may be issued to the point of sale terminal 102 for presentation to a user. Alternatively, the controller 116 may simply wait for the products to be scanned during the normal course of the transaction, with additional products potentially being detected and scanned before scanning of all of the shirts 124A-124C is completed.

As the shirts 124A-124C are scanned, the controller 116 receives the information from the bar code scanner 110 and correlates the universal product code information received from the bar code against that received from the RFID tags. The controller 116 establishes that the UPC information of interest appears on as many bar codes as on RFID tags, and accepts the products as having been presented for entry into the transaction. If matching occurrences of bar codes or other data entries corresponding to the RFID information are not received, the controller suitably issues an alert to the point of sale terminal 102 for presentation to a user. Such an alert may suitably be issued only when transaction entries have been completed, because RFID information for products may be received as soon as the products are brought within range of the reader 108, but data from other sources, such as the bar code reader 110, may be received at any time during the transaction.

Once the controller 116 has established that the products have been properly presented, it provides the information taken from the RFID tags to the point of sale terminal 102 to prepare a transaction entry. The entry may suitably include product identifier and description information, as well as timestamp information and synchronization codes. The point of sale terminal 102 is assured of the reliability of the information when it is received, and uses the information to perform whatever additional functions are necessary. For example, the point of sale terminal 102 may perform price lookups by consulting the server 102 in order to retrieve price data to complete the transaction.

As an alternative or in addition to simply reading information from the RFID tags and using the information to prepare a transaction entry, the controller 116 may use the RFID identifier or product code to retrieve product information, for example, from a product database 130 hosted on the server 102. The controller 116 may retrieve price information if desired, and may also use the RFID identifier for a product to look up product information. In some cases, the RFID tag affixed to a product may simply include an identifier that can be used as an index to retrieve product information. In such cases, the controller 116 retrieves the needed information and uses it to prepare the transaction entry.

In preparing a transaction entry, the controller 116 may use additional information beyond product information. Such information includes rules for treatment of transactions. For example, a customer may be entitled to one free item with the purchase of a specified quantity. In the case of the shirts presented here, a customer may be entitled to receive one shirt free with the purchase of two. The controller 116 is able to consult a set of rules, that may be conveniently stored in a rules database 132 hosted on the server 104, and evaluate a transaction entry in light of the rules. In many cases, rules may affect multiple transaction entries considered together.

For example, a purchase of two shirts in the example presented here may entitle the customer to a free shirt and a discount on neckties. The controller 116 may suitably operate so as to send the proper information to the terminal 102 based on the transaction as a whole. That is, once all transaction entries have been completed, the controller 116 may evaluate the transaction based on promotional rules and identify product combinations meeting conditions set by the rules. The controller 116 identifies and evaluates the product combinations and determines whether or not promotions are applicable, and provides to the terminal 102 updated transaction information based on the identified product combinations. The controller 116 is also capable of sending updated transaction information to the terminal 102 as the transaction proceeds and without waiting for all transaction entries to be completed, as the conditions established by one rule or another are satisfied. Such operation by the controller 116 simplifies the programming needed for the terminal 102 or a similar point of sale system, because the controller 116 performs the analysis itself and transfers the information based on the result of the analysis to the terminal 102.

In the present example, for instance, the RFID information from the tags 126A-126C may be read at the beginning of the transaction, but the bar codes 128A-128C may not all be scanned at the beginning of the transaction. Instead, it may happen that the bar codes 128A and 128B are scanned, then a bar code 132 affixed to a necktie 134 eligible for a discount is scanned, and information for the necktie entered into the transaction. As the transaction continues, the bar code 128C may be scanned. The controller 116, on reviewing the transaction entries that have been made, will determine that the conditions for the free shirt and the discount on the necktie purchase have been met, and will update the transaction entries accordingly.

The reader 108 also communicates with the security tag deactivator 112, and can control the operation of the security tag deactivator 112. The reader 108 is able to sense the presence of RFID tags in its vicinity, and therefore can detect the presence of products at the station 100. The reader 108 can also determine if a transaction entry has been created corresponding to a product, and can inhibit the security tag deactivator 112 from operating if an attempt is made to deactivate a security tag for a product if a transaction entry has not been prepared corresponding to that product.

Once all transaction entries have been completed, the point of sale terminal 102 may suitably present a total to the user and present a request for payment. In the present example, payment is processed using the payment processing interface 114. The terminal 102 communicates an instruction to the reader 108 to process the payment, and the reader 108 controls the payment processing interface 114 and receives appropriate data from the payment processing interface 114. For example, if payment is made using a credit card, the payment processing interface 114 may be used to read the credit card and capture a customer signature. The reader controller 116 may either validate the credit card, for example, by communicating with the server 104 to transmit a validation request to a remote credit card processing center, or may alternatively pass the credit card and signature information to the point of sale terminal for processing. Upon validation of payment, the point of sale terminal 102 suitably prepares an itemized receipt and communicates with the server 104 to make appropriate transaction entries and inventory updates.

It will be recognized that numerous additional data input and communication devices may be used at station 100, in conjunction with the reader 108. For example, various kinds of identification devices may be used, such as fingerprint or palm readers, iris or retinal readers, and other similar devices. Other examples of devices that may be used are inventory control devices, product recognition devices, such as camera based optical recognition units, and any number of data input and communication devices that may be used in such applications. One additional category of devices for which communication may be particularly advantageous is cellular telephones and similar devices increasingly used by consumers for communication and management of transactions and personal information. A cellular telephone or other device may be used by a consumer to store identification information to be used to tender payment for a transaction. The stored information may be transferred to a compatible device without a need for the user to manually enter the information at the time of transfer. Such devices are known in the art and are coming into increasing use, and the reader 108 may advantageously be equipped and programmed for communication with such a device.

As described in further detail below, the reader 100 is suitably adapted to accommodate any number of devices, including software supporting a wide variety of optional devices, with standard connection interfaces. As also described below, software for the controller 116 may suitably be constructed so as to accommodate new or updated devices with relatively simple adaptations.

Only one point of sale station 100 is illustrated here, but it will be recognized that multiple stations such as the station 100 may be employed in a system using such stations, with RFID readers such as the reader 108 being used at each station to communicate with RFID tags in the vicinity of the station and to receive and coordinate data from other data input devices in use at the station.

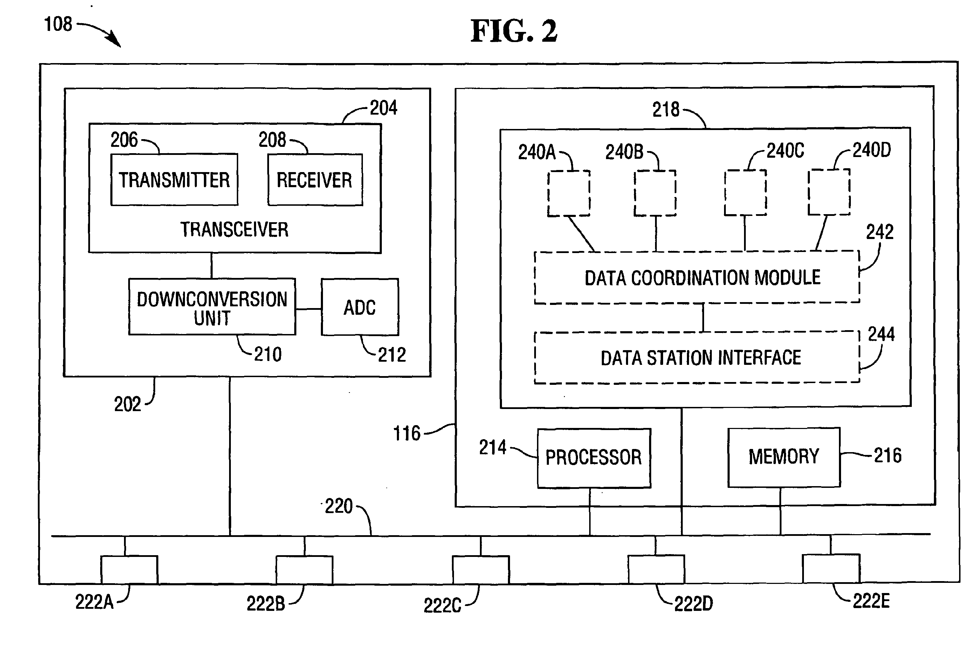

Fig. 2 illustrates additional details of the RFID reader 108 according to an aspect of the present invention. The reader 108 includes an RFID communication unit 202. The RFID communication unit 202 includes a transceiver 204, including a transmitter 206 and a receiver 208. The RFID communication unit 202 also includes a downconversion unit 210, and an analog to digital converter 212. The components of the RFID communication unit 202 operate as known in the art to receive and digitize signals from RFID tags.

The reader 108 also includes the controller 116. The controller 116 includes a processor 214, high speed memory 216 and long term memory 218. The components of the controller 116 communicate with one another and with the RFID communication unit 202 over a bus 220.

The reader 108 also includes a number of data ports 222A-222E, linked with the bus 220 and providing communication with data input devices that may be used with the reader 108, such as the devices 110, 112, and 114, as well as the point of sale terminal 202, or other devices suitable for any suitable application consistent with the present invention.

The processor 212, high speed memory 214 and long term memory 216 are typical of those used in RFID readers, and provide sufficient processing power to manage the communication by the reader 108 and to process the data collected by, the reader 108. As is typical of RFID readers, the reader 108 communicates with RFID tags by transmitting a carrier signal and receiving responses from devices within range. The carrier signal is transmitted, and responses received, at a rate on the order of hundreds of times per second, and the controller receives and interprets this data to identify and receive information from devices from which responses are received.

The controller 116 operates under the control of various software modules, suitably hosted on the long term storage 216 and transferred to high speed memory 214 for execution by the processor 212 as needed. The software modules suitably include device interface modules 240A-240D, a data coordination module 242, and a data station interface module 244.

In the exemplary embodiment illustrated here, the module 240A is an RFID reader interface and control module, the module 240B is a bar code scanner interface module, the module 240C is a security tag deactivation module, and the module 240D is a payment processing interface module.

The modules 240A-240D, the module 242, and the module 244 may be implemented so as to essentially form layers, so that a change affecting one layer can be accommodated with changes only to the affected layer. For example, if such an arrangement is used, and if the RFID reader 108 is used with the point of sale terminal 102, the bar code scanner 110, the security tag deactivator 112, and the payment processing interface 114, and the bar code scanner 110 is replaced with an improved model, the module 240B may be changed without any need to change the other modules.

The module 242 suitably mediates data and communication received from the modules 240A-240C and provides the data to the module 244. The module 244 in turn suitably supplies data and communication in a format adapted for a data station such as the point of sale terminal 102. If a new terminal is substituted for the terminal 102, the module 244 can be changed to accommodate it, but the other modules do not need to be changed in order to accommodate the new terminal.

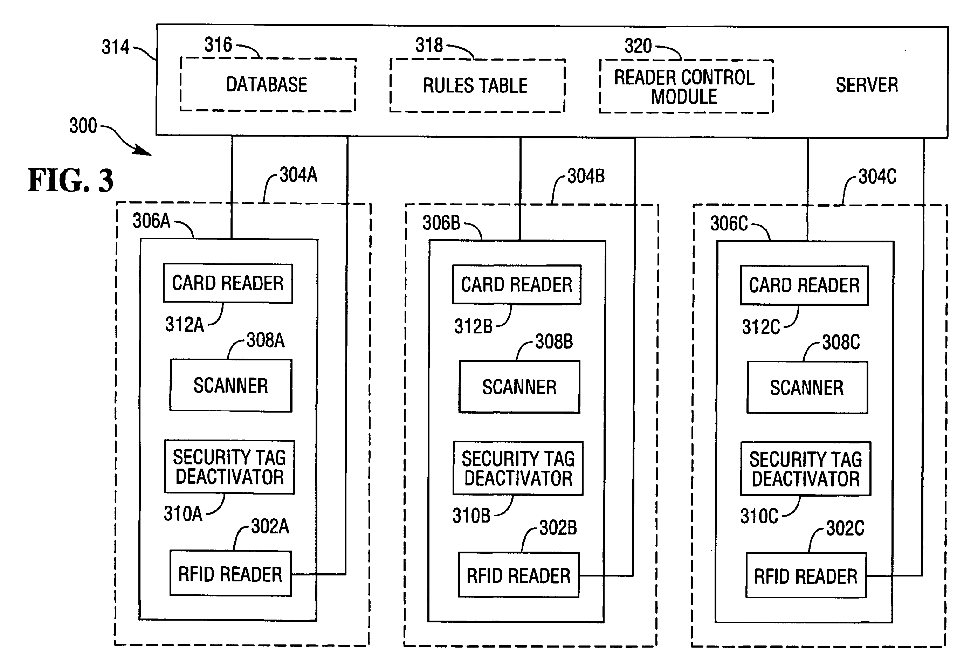

It will be recognized that one or more readers similar to the reader 108 may be used in numerous different applications. As an additional example, Fig. 3 illustrates retail transaction processing system 300, implementing using a plurality of RFID readers 302A-302C according to an aspect of the present invention. The readers 302A-302C are operated in connection with retail checkout stations 304A-304C, respectively. The checkout stations 304A-304C include point of sale terminals 306A-306C, respectively, with each of the stations 304A-304C including various additional data entry devices communicating with the reader used by the station. For example, the stations 304A-304C may suitably include scanners 308A-308C, security tag deactivators 310A-310C, and credit/debit card readers 312A-312C, respectively. The readers 302A-302C and checkout stations 304A-304C may suitably operate in way similar to those discussed above in connection with Figs. 1 and 2. The use of a plurality of readers such as the readers 304A-304C allows for cooperative operation between readers. For example, if the reader 302A is experiencing a high workload and the reader 302C is experiencing a low workload, a portion of the processing load of the reader 304A may be passed to the reader 302C. The readers 302A-302C may suitably communicate with a central server 314, which provides access to information, such as a database 316 and a rules table 318. The server 314 may also suitably host a reader control module 320. The reader control module 320 may receive workload information from the various readers 302A-302C and manage workload distribution between readers when needed. Alternatively, the readers 302A-302C may communicate between themselves and manage cooperative sharing of workload without using a reader control module 320 as an intermediary.

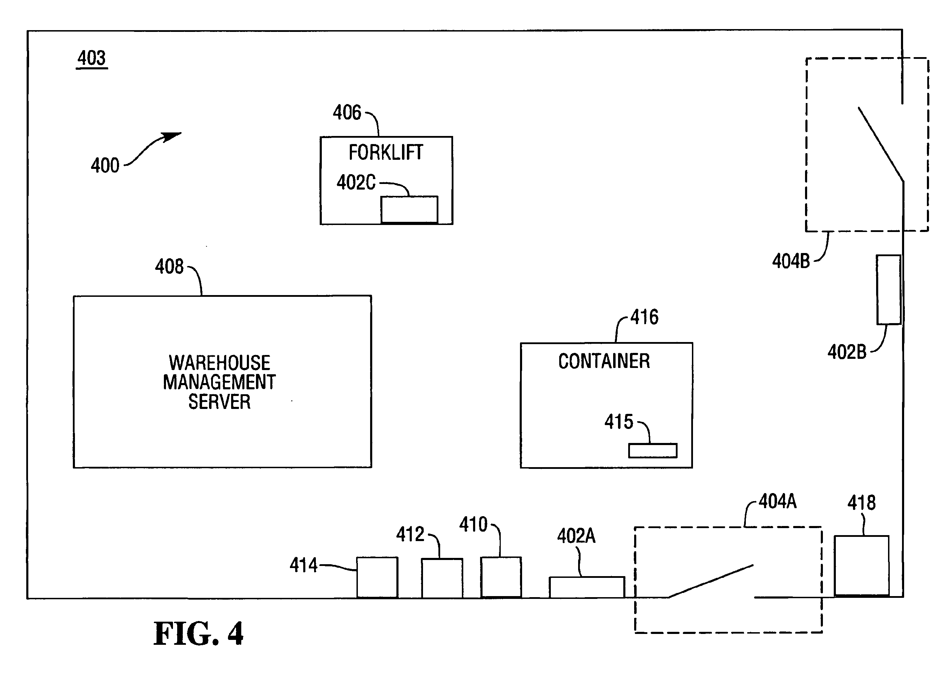

Fig. 4 illustrates a warehouse control system 400 implemented using a plurality of RFID readers 402A-402C according to an aspect of the present invention. The system 400 controls goods stored in, and transported into and out of, a warehouse 403.

The readers 402A and 402B are placed at doors 404A and 404B, and the reader 402C is a mobile reader mounted on a forklift 406. All of the readers communicate with a warehouse management server 408. The readers 402A and 402B may receive information from a plurality of different sources and correlate the information in order to perform needed operations. For example, the reader 402A may operate to detect RFID tags affixed to goods brought within the vicinity of the door 404A. The reader 402A may also receive data from authentication devices, such as an identification card reader 410, a keypad 412, and a fingerprint reader 414. Suppose that the reader 402A detects an RFID tag 415 affixed to a container 416 containing goods stored in the warehouse. The reader 402A suitably examines a door control interface for the door 404A in order to make sure that the door 404A is closed, and makes sure that the door 404A is armed so that an alert will be issued, such as by sounding an alarm, if the door 404A is opened before the door 404A is disarmed. The reader 402A communicates with warehouse management server 408 to determine if the container 416 is authorized for removal. The reader 402A also receives data from devices such as the identification card reader 410 and either the keypad 412 or the fingerprint reader 414 to identify an employee accompanying the container 416 and to authenticate the identity of the employee. The reader 402A may also operate an entry and exit reporting station 418 to receive an input from an employee indicating that the container 416 is being removed from the warehouse 403. The reader 402A then disarms the door 404A and prepares a report for the server 408, identifying the container 416, indicating the time of removal and the door 404A through which the container 416 was removed, and identifying the employee reporting removal of the goods. The reader 402A receives and correlates data from a number of disparate data input devices and prepares a single report for the server 408. As noted above with respect to Fig. 3, the readers used in the system 400 may be designed to share workload, with management of such sharing being accomplished through direct communication between the readers, or through an intermediary, such as the server 408.

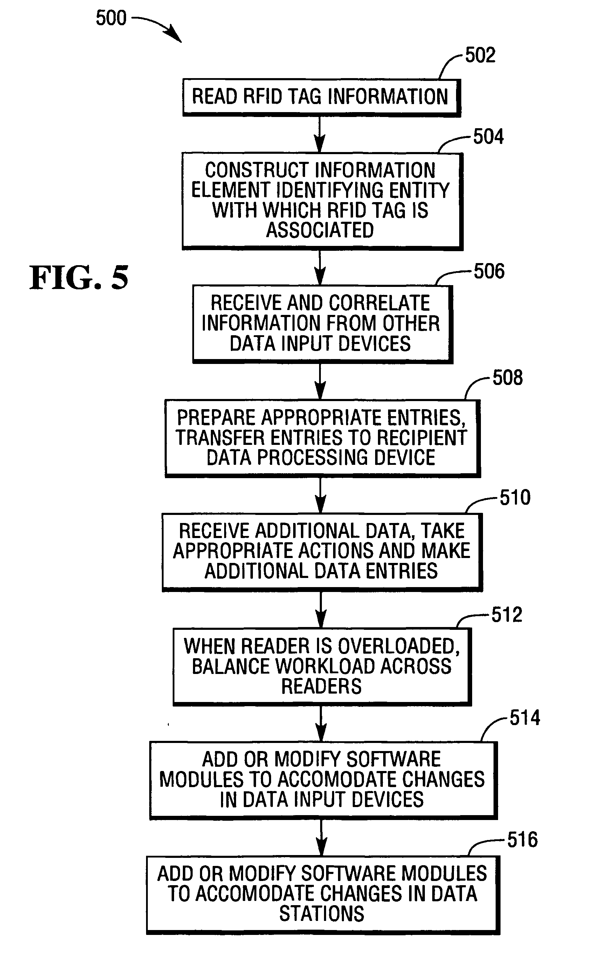

Fig. 5 illustrates a process 500 of receiving, correlation, and management of data according to an aspect of the present invention. At step 502, RFID tag information is received by an RFID reader from one or more RFID tags within range. The reader may be one of a plurality of readers used in an installation. The tag information suitably includes an RFID tag identifier for each device, and may also include additional information, such as descriptive and identifying information for an entity with which each device is associated. The entity may include, for example, a product to which an RFID tag is affixed, or an employee holding an RFID identification card.

At step 504, the tag information is used to construct an information element identifying the entity with which the device is associated. Construction of the information element may be performed by using the RFID identifier to retrieve associated information, by using descriptive and identifying information stored in and received from the RFID identifier, or both. At step 506, information from other data input devices is received and correlated with the information received from the RFID tag. To take one example, the information may be information in another form for a product bearing an RFID tag, such as a bar code also affixed to the product, so that scanning of the bar code establishes that a product whose RFID tag is detected is present at a particular point of sale station for a transaction using that station. To take another example, the information may be identifying information for an employee authorized to transport goods whose presence has been detected. At step 508, appropriate data entries are prepared and transferred to a recipient data processing device. At step 510, additional data inputs are received and actions taken by the RFID reader in order to manage transactions and events. For example, an RFID reader may receive inputs from a credit card reader in order to process payment for a transaction, and may update sales and inventory information on a server. To take another example, an RFID reader may receive an exit report for the removal of goods, disarm an exit door, and update an exit log and an inventory file for a warehouse. At step 512, whenever the RFID reader is experiencing an excessive workload and unused processing capacity is available at other readers, workload redistribution is performed in order to balance the workload across the readers. At step 514, when changes are made to existing data input devices with which an RFID reader communicates are made, or new data input devices are added for communicating to a reader, appropriate software changes are made to software modules managing the reader's communication with the data input devices. At step 516, when the reader is used with a new or changed data station, for example, when a data station is upgraded, a software module mediating communication between the reader and the data station is modified or replaced, as needed.

While the present invention is disclosed in the context of aspects of presently preferred embodiments, it will be recognized that a wide variety of implementations may be employed by persons of ordinary skill in the art consistent with the above discussion and the claims which follow below.

## Claims

1. A radio frequency identification (RFID) reader, comprising:
an RFID communication unit for communicating with RFID tags; and
a controller for managing the operation of the RFID communication unit, the controller further operating to manage communication with additional data input devices used to collect information for use in a transaction and to coordinate data received from the additional data input devices and the RFID tags.

2. The RFID reader of claim 1, wherein the RFID controller coordinates communication between the RFID reader and a data station using data collected by the RFID reader, the RFID controller being operative to coordinate and process the data received from various devices and to furnish the data to the data station in a form usable by the data station with a minimum of further processing.

3. The RFID reader of claim 2, wherein the RFID controller furnishes data to the data station in the form of transaction entries.

4. The RFID reader of claim 2, wherein the RFID controller is operative to correlate information received from RFID tags against data received from one or more additional data input devices in order to verify the presence of articles to be entered into a transaction.

5. The RFID reader of claim 2, wherein the RFID controller is operative to apply predetermined rules relating to articles entered into a transaction and to process transaction entries in light of such predetermined rules.

6. The RFID reader of claim 5, wherein the predetermined rules relate to treatment of combinations of goods entered together in a transaction, and wherein the RFID controller examines transaction entries, identifies goods to which the rules apply, and makes or updates transaction entries when the presence of combinations of goods triggering applications of particular rules is established.

7. A point of sale system, comprising:
a point of sale terminal for receiving transaction information and passing the transaction information to one or more central data repositories;
a plurality of data input devices for receiving data relating to transactions for which information is received by the point of sale terminal; and
an RFID reader for communicating with and receiving data from RFID tags in the vicinity of the point of sale terminal, the RFID reader also receiving data from the data input devices and coordinating data from the RFID tags and the data input devices and furnishing transaction information to the point of sale terminal.

8. A system for management of data inputs, comprising:
a plurality of data input devices; and
one or more radio frequency identification (RFID) readers, each RFID reader communicating with one or more of the data input devices, and with one or more RFID tags in the vicinity of the reader, each reader coordinating data received from one or more of the data input devices and RFID tags to prepare data elements conveniently usable by data stations with which the RFID reader may communicate.

9. The system of claim 8, wherein each reader is operative to indicate that it is experiencing an excessive workload and wherein at least one reader is operative to assume a portion of the workload assigned to another reader when the other reader has indicated that it is experiencing an excessive workload.

10. The system of claim 8, further comprising a data management server for receiving data elements from one or more of the RFID tags and logging data element information and taking appropriate actions based on the data element information.

11. The system of claim 8, wherein at least one of the RFID readers manages data related to warehouse entry security, and where the reader receives RFID data from RFID tags affixed to goods in the vicinity of a warehouse entry or exit and examines the RFID data in comparison with stored data and data received from additional data input devices to establish that proper security is maintained.

12. The system of claim 10, wherein the reader receives employee identification information associated with an employee accompanying goods for which RFID data has been detected and authenticates the employee information before allowing removal of the goods.

13. A method of data management, comprising the steps of:
reading radio frequency identification (RFID) data from an RFID tag;
constructing an information element identifying an entity with which the RFID data is associated;
receiving data from additional data input devices, the data from the additional data input devices being furnished to the RFID reader; and
preparing transaction entries based on the RFID data and the data received from the additional input devices.

14. The method of claim 13, further comprising a step of redistributing processing workload from one RFID reader to one or more additional RFID readers when the first reader indicates that it is experiencing an excessive workload and the one or more additional RFID readers have additional available processing capacity.

15. The method of claim 13, further comprising a step of receiving additional data as a transaction proceeds and adding additional transaction entries and updating previously prepared entries based on the additional data.

16. The method of claim 13, further comprising a step of furnishing transaction entries to a data station as information from the RFID tags and the additional data input devices is correlated and the transaction entries are created.

17. The method of claim 15, further comprising a step of modifying RFID reader software modules to accommodate changes to data input devices used with an RFID reader.

18. The method of claim 16, further comprising a step of modifying an RFID reader software module to accommodate changes to a data station with which an RFID reader is used.
